# EUROPEAN PATENT APPLICATION

(11) **EP 4 350 047 A2**
(43) Date of publication of application: **10.04.2024**
(21) Application number: 23195666.5
(22) Date of filing: 06.09.2023
(51) Int. Cl.: C25B 1/04, C25B 11/031, C25B 11/052, C25B 11/055, C25B 15/08

(54) **ELECTRODE, MEMBRANE ELECTRODE ASSEMBLY, ELECTROCHEMICAL CELL, STACK, AND ELECTROLYZER**

(30) Priority: 03.10.2022 JP 2022159827
(71) Applicant: Kabushiki Kaisha Toshiba, Minato-ku Tokyo 105-0023 (JP); Toshiba Energy Systems & Solutions Corporation, Kawasaki-shi, Kanagawa 212-0013 (JP)
(72) Inventor: YOSHINAGA, Norihiro, Tokyo (JP); NAKANO, Yoshihiko, Tokyo (JP); FUKAZAWA, Taishi, Tokyo (JP); KANAI, Yuta, Tokyo (JP); SUGANO, Yoshitsune, Tokyo (JP); ONO, Akihiko, Tokyo (JP)
(74) Representative: Marks & Clerk LLP

(57) **Abstract**

An electrode according to an embodiment includes a support, an intermediate layer including carbon particles and resin on the support, and a catalyst layer on the intermediate layer. A thickness of the intermediate layer is 70 [um] or more and 300 [µm] or less.

## Description

### FIELD

The present embodiments relate to an electrode, a membrane electrode assembly, an electrochemical cell, a stack, and an electrolyzer.

### BACKGROUND

In recent years, electrochemical cells have been actively studied. Among electrochemical cells, for example, a polymer electrolyte membrane electrolysis cell (PEMEC) is expected to be used for hydrogen generation in a large-scale energy storage system. In order to ensure sufficient durability and electrolytic properties, platinum (Pt) nanoparticle catalysts are generally used for PEMEC cathodes, and noble metal catalysts such as iridium (Ir) nanoparticle catalysts are used for positive electrodes. Additionally, a method for obtaining hydrogen from ammonia is also considered. In addition, a method for obtaining organic material or carbon monoxide by electrolysis of carbon dioxide is also considered.

### BRIEF DESCRIPTION OF THE DRAWINGS

FIG. 1 is a schematic diagram of an electrode according to an embodiment.
FIG. 2 shows analysis spots according to an embodiment.
FIG. 3 is a cross-sectional schematic diagram according to an embodiment.
FIG. 4 shows analysis spots according to an embodiment.
FIG. 5 is a schematic diagram of a membrane electrode assembly according to an embodiment.
FIG. 6 is a schematic diagram of an electrochemical cell according to an embodiment.
FIG. 7 is a schematic diagram of a stack according to an embodiment.
FIG. 8 is a conceptual diagram of an electrolyzer according to an embodiment.

### DETAILED DESCRIPTION

An electrode according to an embodiment includes a support, an intermediate layer including carbon particles and resin on the support, and a catalyst layer on the intermediate layer. A thickness of the intermediate layer is 70 [um] or more and 300 [um] or less.

Hereinafter, the embodiments will be described with reference to the drawings.

It is to be noted that the same reference numerals are given to common components throughout the embodiments, and redundant explanations are omitted.

In the specification, values at 25 [°C] and 1 atm (atmosphere) are shown. Each thickness of the members represents an average of distance in a stacking direction.

### (FIRST EMBODIMENT)

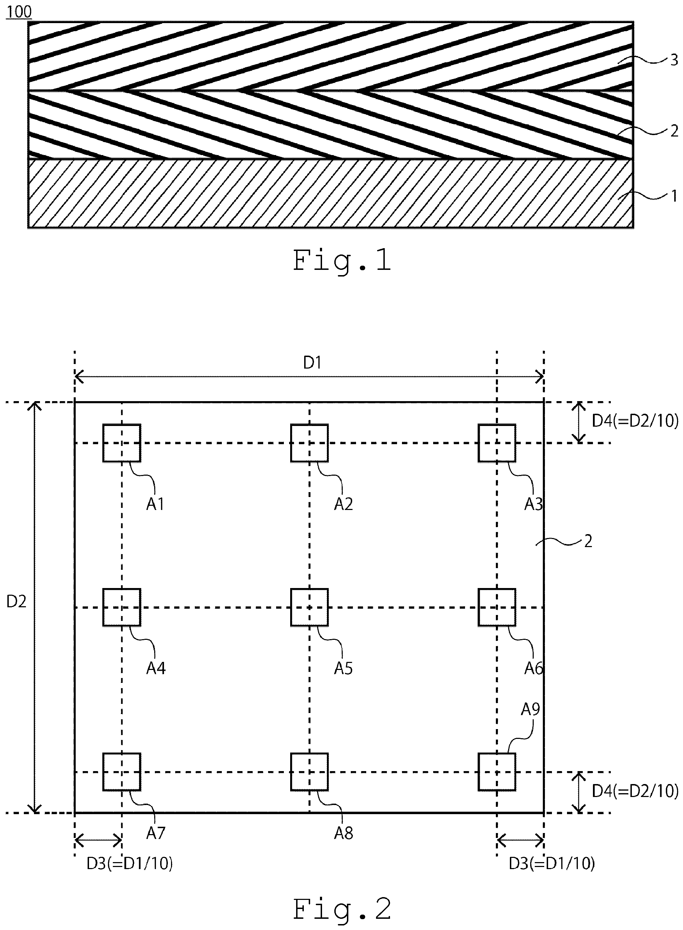

The first embodiment relates to an electrode. A cross-sectional schematic diagram of an electrode 100 according to the embodiment is shown in FIG. 1. The electrode 100 includes a support 1, an intermediate layer 2, and a catalyst layer 3. The electrode 100 is used as an electrode for generating hydrogen.

The electrode 100 according to the first embodiment is used as a cathode for water electrolysis. The electrode 100 according to embodiments can be used as a cathode for producing ammonia by electrolysis. The electrode 100 according to embodiments can be used as a cathode of an electrolyzer for synthesizing ammonia. Hereinafter, an example of water electrolysis is described in the first embodiment and the other embodiments. The electrode 100 according to embodiments can be also used for other than water electrolysis, for example, as a cathode of a membrane electrode assembly for electrolysis of synthesizing ammonia so that ultrapure water is supplied to an anode, proton and oxygen is generated in the anode by decomposing water, the generated proton passes through an electrolyte membrane, and ammonia is synthesized by binging nitrogen provided to a cathode, protons, and electrons. The electrode 100 according to embodiments can be also used as a cathode for generating hydrogen by electrolyzing ammonia. The electrode 100 according to embodiments can be used as a cathode for a hydrogen generation apparatus. Hereinafter, an example of water electrolysis is described in the first embodiment and the other embodiments. The electrode 100 according to embodiments can be also used for other than water electrolysis, for example, as a cathode of a membrane electrode assembly for electrolysis of decomposing ammonia so that ammonia is supplied to a cathode, proton and nitrogen is generated in the cathode by decomposing ammonia, the generated proton passes through an electrolyte membrane, and hydrogen is synthesized by binging protons and electrons. The electrode 100 can be also used for an anode of an electrolyzer which electrolyze carbon dioxide to generate organic compounds such as methanol and ethylene and carbon monoxide.

A porous member having high conductivity is preferable for the support 1. The support 1 is a porous member through which gas and/or fluid pass. The support 1 includes carbon fibers. The support 1 is preferably a non-woven cloth sheet of carbon fibers, a carbon paper, or a carbon cloth.

When movability of materials is considered, a porosity rate of the support 1 is preferably 20 [%] or more and 95[%] or less and more preferably 40 [%] or more and 90 [%] or less. A diameter of carbon fibers of the support 1 is preferably 1 [um] or more and 500 .[µm] or less. In view of reactivity and supplying electricity, the diameter of the fibers of the support 1 is more preferably 1 [um] or more and 100 [um] or less. When the support 1 is sintered particles, particle diameters of the sintered particles are preferably 1 [um] or more and 500 [µm] or less. In view of reactivity and supplying electricity, the particle diameters of the sintered particles are preferably 1 [um] or more and 100 [um] or less .

The intermediate layer 2 is provided between the support 1 and the catalyst layer 3. The side surface of the intermediate layer 2 facing the support 1 side is preferably in direct contact with the base material 1. The side of the intermediate layer 2 facing the opposite side of the support 1 is preferably in direct contact with the catalyst layer 3. The intermediate layer 2 is a so-called MPL (Micro Porous Layer) layer.

The intermediate layer 2 includes carbon particles 2A and resin 2B. The intermediate layer 2 is preferably a mixture of the carbon particles 2A and the resin 2B. The intermediate layer 2 is conductive and permeable. If the resin 2B included in the intermediate layer 2 is a hydrophilic resin, the intermediate layer 2 is a water retaining layer. If the resin 2B included in the intermediate layer 2 is a hydrophobic resin, then the intermediate layer 2 is a hydrophobic layer. It is preferable that the intermediate layer 2 does not include fibrous members with a ratio of short side to long side (long side/short side) of 10 or more.

As carbon particles 2A, for example, Ketjen black (trademark), acetylene black, vulcanum (trademark), activated carbon, etc. can be used.

The average primary particle size of carbon particles 2A is preferably 5 [nm] or more and 300 [nm] or less. The average primary particle diameter of carbon particles 2A is 25 [nm] or more and 200 [nm] or less, 30 [nm] or more and 150 [nm] or less, and 30 [nm] or more and 100 [nm] or less is even more preferred. The ratio of the short side to the long side (long side/short side) of carbon particles 2A is 9 or less.

Polytetrafluoroethylene (PTFE), Nafion (trademark, DuPont), Flemion (trademark, Asahi Kasei), Selemion (trademark, Asahi Kasei), Aquivion (trademark, Solvay Specialty Polymers), or Aciplex (trademark Asahi Glass Co., Ltd.) and others can be used as the resin 2B in the intermediate layer 2.

When the thickness of the intermediate layer 2 is thicker, the resistance between the support 1 and the catalyst layer 3 becomes higher. Therefore, in water electrolysis and fuel cells, an MPL layer with a thickness of 50 [um] or less is generally used for the intermediate layer 2. However, when the electrode 100 generates hydrogen, if the thickness of the intermediate layer 2 is less than 50 [µm], the catalyst layer 3 may peel off from the electrolyte membrane due to hydrogen generation. When a catalyst is supported on a carrier, such as a Pt/C catalyst with Pt supported on carbon particles 2A is used for the catalyst layer 3, the thickness of the catalyst layer 3 is, for example, 50 [µm] or more, and the catalyst layer 3 is thick and strong. However, when a carrier-less catalyst layer is used, the catalyst layer 3 and the electrolyte membrane tend to peel off due to the pressure generated by hydrogen generation, because the thickness of the catalyst layer 3 is thin and its strength is low. If the thickness of the catalyst layer 3 is thin with a carrier-less catalyst, it is difficult to choose the approach of increasing the thickness and strength of the catalyst layer 3 because it is difficult to maintain the catalyst structure and the number of catalyst metals that are not effectively used increases.

The carrier-less Pt-based catalysts are used for fuel cells, but hydrogen is consumed in fuel cells, so the reaction does not generate pressure that causes the interface between the electrolyte membrane and the catalyst layer 3 to peel off. In electrolysis, such as water electrolysis, there is hydrogen generation that is not present in fuel cells, so the strength of the MPL, which did not need to be considered in electrodes for fuel cells, has an impact on durability in electrodes 100 for water electrolysis.

For the above reasons, the average thickness of the intermediate layer 2 is preferably 70 [um] or more and 300 [um] or less, and more preferably 70 [um] or more and 200 [um] or less.

The thickness of the intermediate layer 2 is determined by cross-sectional observation of nine observation spots (A1 - A9) in the plane of the intermediate layer 2 shown in Figure 2.

Each spot is square-shaped and has an area of at least 1 mm². Then, as shown in FIG. 2, when the electrode length D1 and the electrode width D2 (D1 ≥ D2) are set, a virtual line is drawn at a distance of D3 (= D1/10) inwardly from each of the two opposite sides in the width direction of the intermediate layer 2, a virtual line is drawn at a distance of D4 (= D2/10) inwardly from each of the two opposite sides in the length direction of the intermediate layer 2 A virtual line is drawn at a distance of D3 (=D1/10) from the center of the intermediate layer 2, and another virtual line is drawn parallel to the width direction through the center of the intermediate layer 2, and another virtual line is drawn parallel to the length direction through the center of the intermediate layer 2, and the areas centered at the nine intersection points of the virtual lines are the observation spots A1 to A9.

The average thickness of the intermediate layer 2 shown in the cross-sectional image of each spot is determined, and the average of the average values determined for the nine spots is the average thickness of the intermediate layer 2.

When the thickness of the catalyst layer 3 is thin, a thicker intermediate layer 2 is preferred. When the thickness of the catalyst layer 3 is thick, a thin intermediate layer 2 is preferred. Therefore, the average thickness of the intermediate layer 2 relative to the average thickness of the catalyst layer 3 ([average thickness of intermediate layer 2 [um] / [average thickness of the catalyst layer 3 [µm]]) is preferably 50 or more and 250 or less, preferably 70 or more and 2000 or less, and more preferably 140 or more and 1000 or less.

The porosity of the intermediate layer 2 is preferably 30% or more and 80% or less. If the porosity of the intermediate layer 2 is too low, the gas diffusivity may be decreased. If the porosity of the intermediate layer 2 is too high, the mechanical strength of intermediate layer 2 will decrease. If the porosity of the intermediate layer 2 is too high, the humidity control ability of the intermediate layer 2 may decrease. The porosity of the intermediate layer 2 is the ratio of the gaps in the intermediate layer 2 per unit volume, expressed as a percentage. The porosity can be calculated from the volume V (m³) of the intermediate layer 2, the mass m (kg) of the intermediate layer 2, and the density ρ (kg/m³) of the constituent materials of the intermediate layer 2. Thus, (porosity) = 1-m/ρ × v.

The porosity of the intermediate layer 2 affects the strength and gas diffusivity. Considering sufficient gas diffusion and high strength depending on the thickness of the catalyst layer 3, the product of the average thickness of the intermediate layer 2 and the porosity of the intermediate layer 2 ([porosity [%] of the intermediate layer 2 × [average thickness [um] of the intermediate layer 2] / [average thickness [pm]of the catalyst layer 3]) to the average thickness of the catalyst layer 3 is preferably 20 or more and 200 or less, and more preferably 30 or more and 170 or less.

The intermediate layer 2 is obtained, for example, by applying a paste including the carbon particles 2A and the resin 2B on the support 1 and allowing it to dry.

The catalyst layer 3 is a carrier-less and porous catalyst layer in which the catalyst is not supported on a carrier. The catalyst layer 3 includes one or more of metals, alloys, and metal oxides. The metal, alloy and metal oxide of the catalyst layer 3 includes one or more selected from the group consisting of Pt, Ru, Rh, Os, Ir, Pd, and Au. The metal, alloy and metal oxide of the catalyst layer 3 preferably includes at least Pt. The thickness of the catalyst layer 3 is preferably 0.05 [um] or more and 2 [um] or less, and more preferably 0.1 [um] or more and 1 [um] or less. Further, 0.1 um - 0.5 um is more preferred. The thickness of the catalyst layer 3 is preferably 0.5 [um] or more and 5 [um] or less.

It is preferable that the catalyst layer 3 is carrier-less and has porous catalyst units. The catalyst unit has a structure of alternating layers of sheet layers and pore layers, for example. The sheet layer is preferably a catalyst having the composition shown by Pt_{U}M₁₋ᵤ where u is 0 < u ≤ 0.9 and element M is one or more elements selected from the group consisting of Co, Ni, Fe, Mn, Ta, W, Hf, Si, Mo, Ti, Zr, Nb, V, Cr, Al, and Sn. The catalyst includes more than 0 atom% and 90 atom% or less of Pt and more than 10 atom% and less than 100 atom% of element M.

The catalyst layer 3 includes noble and non-noble metal oxides, mainly composed of Ir and Ru. An intermediate layer, not shown, may be provided between the catalyst layer 3 and the support 1.

In the electrode 100, the average size (circumscribed circle diameter) of the catalyst units is preferably 50 [nm] or more and 100 [um] or less. If the size of the catalyst unit in the width direction is too small, it is difficult to manufacture the catalyst unit. The catalyst unit with too large size is also difficult to manufacture. For smooth material transfer of gas supply and product discharge, the size of the catalyst unit is preferably 0.1 [um] or more and 1 [um] or less.

The average thickness (average height of the catalyst units) of the catalyst layer 3 is preferably 0.1 [um] or more and 2 [um] or less, and more preferably 0.1 [um] or more and 1 [um] or less.

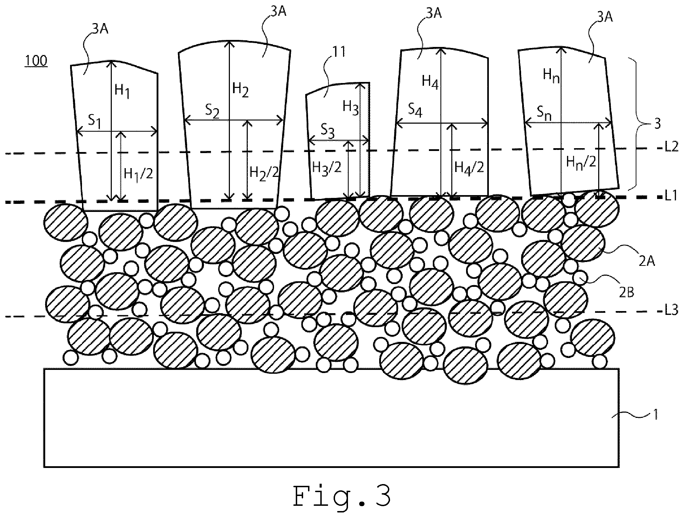

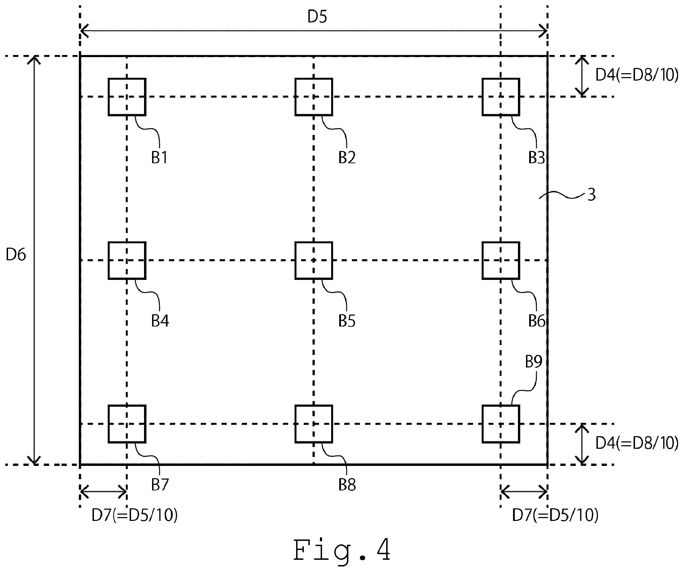

Referring now to FIG. 3, we explain how to determine the size and height of the catalyst unit. FIG. 3 is a schematic diagram, but in reality, it is obtained from an image of a cross-section by a scanning electron microscope (SEM). FIG. 4 is a cross-sectional diagram of the catalyst layer 3 in the plane direction at the location of the virtual line L2 in FIG. 3. The cross-section in FIG. 4 does not show the catalyst units in the catalyst layer 3. The observation site by SEM is the cross-sectional area including these nine observation spots (B1 to B9) designated in the plane of the catalyst layer 3 shown in FIG. 4. When analyzing the MEA-enabled electrode 100, the catalyst layer 3 may be partially embedded in the electrolyte membrane.

Each spot is square-shaped and has an area of at least 5 mm². Then, as shown in FIG. 4, when the electrode length is D5 and the electrode width is D6 (D5 ≥ D6), a virtual line is drawn at a distance of D7 (= D5/10) inward from each of the two opposing sides in the width direction of the catalyst layer 3, and at a distance of D8 (= D6/10) inward from each of the two opposing sides in the length direction of the catalyst layer 3, a virtual line is drawn parallel to the width direction through the center of the intermediate layer 2, and another virtual line is drawn parallel to the length direction through the center of the catalyst layer 3, and the areas centered at the nine intersection points of the virtual lines are the observation spot B1 to B9. The observed cross section by SEM is perpendicular to the plane shown in FIG. 4. The observation area should be adjusted according to the size of the catalyst unit. The observation area is adjusted so that the number of catalyst units whose cross section can be seen is 10 or more and 20 or less, and the cross section becomes one observation area.

First, determine the reference line L1 to determine the height of the catalyst unit. At 50 nm intervals, determine the points (points of contact) of the intermediate layer 2 that are in contact with the catalyst unit. The approximate straight line of the contact points is the reference line L1. The points of contact for determining the reference line L1 shall be 10 or more. If the number of contact points is less than 10, shift the observation area within the observation spot and again determine the reference line L1.

Next, determine the height of each catalyst unit from the reference line. Determine the height (H1 to Hn) in the direction perpendicular to the reference line L1. Then, the width of each catalyst unit (S1-Sn) in the direction parallel to the reference line L1 at half the height (e.g., H1/2) is the width of each catalyst unit. the average value of S1-Sn is the width of the catalyst unit at each observation spot, and the average width of the catalyst unit at the nine observation spots is the size.

The amount of noble metal in the catalyst layer 3 is preferably 0.02 [mg/cm²] or more and 1.0 [mg/cm²] or less, and more preferably 0.05 [mg/cm²] or more and 0.5 [mg/cm²] or less. The sum of these masses can be measured by ICP-MS.

The porosity of the catalyst layer 3 is preferably 10 [%] or more and 90 [%] or less, and more preferably 30 [%] or more and 70 [%] or less.

The catalyst layer 3 is preferably formed on the intermediate layer 2 by sputtering, alternately forming a sheet layer precursor that is substantially a sheet layer precursor and includes precious metals and a gap layer precursor that is substantially a gap layer precursor and mainly consists of non-noble metals, and eluting the non-noble metals by acid treatment. The catalyst layer 3 may be formed on a component other than the intermediate layer 2 and then transferred onto the intermediate layer 2. The non-noble metals included in the gap layer precursor are preferably metals including one or more elements selected from the group consisting of Ni, Co, and Mn.

The electrode 100 has a high durability due to a configuration that does not easily peel off from the electrolyte membrane.

### (SECOND EMBODIMENT)

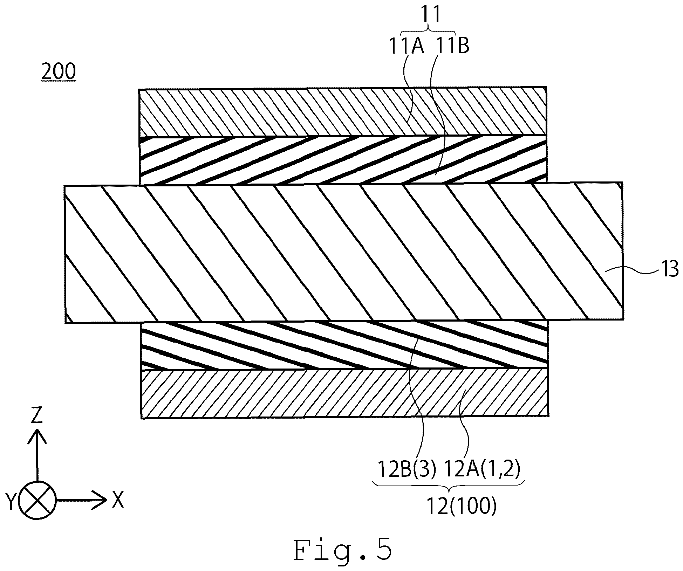

A second embodiment relates to a membrane electrode assembly (MEA). FIG. 5 shows a schematic diagram of a membrane electrode assembly 200 of the embodiment. The membrane electrode assembly 200 has a first electrode 11, a second electrode 12, and an electrolyte membrane 13. The first electrode 11 is preferably an anode electrode and the second electrode 12 is preferably a cathode electrode. It is preferable that the electrode 100 of the first embodiment is used for the second electrode 12. The membrane electrode assembly 200 of the embodiment is preferably used in an electrochemical cell or stack for hydrogen generation or oxygen generation.

It is preferable that the electrode 100 of the first embodiment be used as the first electrode 11. The catalyst layer 3 of the electrode 100 used as the first electrode 11 is provided on the electrolyte membrane 13 side. The catalyst layer 3 is preferably in direct contact with the electrolyte membrane 13.

The first catalyst layer 11B has a catalyst metal. The first catalyst layer 11B is preferably particles of the catalytic metal and the catalyst metal is not supported on a carrier. The first catalyst layer 11B is preferably a porous catalyst layer. The catalyst metal is not limited, but preferably includes one or more elements selected from the group consisting of Ir, Ru, and Pt, for example. The catalyst metal is preferably a metal, alloy or metal oxide.

The amount of metal per area of the first catalyst layer 11B is preferably 0.02 [mg/cm²] or more and 1.0 [mg/cm²] or less, and more preferably 0.05 [mg/cm2] or more and 0.5 [mg/cm²] or less. The sum of these masses can be measured by ICP-MS.

The porosity of the first catalyst layer 11B is preferably 10 [%] or more and 90 [%] or less, and more preferably 30 [%] or more and 70 [%] or less. When the amount of metal per area of the first catalyst layer 11B is within the above range and the porosity is high or the hydrogen generated at the cathode (second electrode 2) leaks through the electrolyte membrane 13 to the anode (first electrode 11), hydrogen can easily pass through the first catalyst layer 11B and the first support 11A since the first catalyst layer 11B is coarse dense. With the leakage measures of the embodiment, hydrogen leakage can be effectively reduced even when using the first catalyst layer 11B, which is easy for hydrogen to leak due to its high porosity. Even when a catalyst layer that is difficult for hydrogen to leak is used for the first catalyst layer 11B, hydrogen leakage can be effectively reduced in the membrane electrode assembly 200 of the embodiment.

The second electrode 12 has a second support 12A (support 1 with the intermediate layer 2) and a second catalyst layer 12B (the catalyst layer 3). The second catalyst layer 12B is provided on the second support 12A. The second catalyst layer 12B is provided on the electrolyte membrane 13 side. The second catalyst layer 12B is preferably in direct contact with the electrolyte membrane 13.

The electrolyte membrane 13 is a proton-conductive membrane. The electrolyte membrane 13 is preferably a fluorinated polymer or aromatic hydrocarbon polymer having one or more from the group consisting of sulfonic acid groups, sulfonimide groups, and sulfate groups. The electrolyte membrane 13 is preferably a fluorinated polymer having sulfonic acid groups. For example, Nafion (trademark DuPont), Flemion (trademark Asahi Kasei), Selemion (trademark Asahi Kasei), Aquivion (trademark Solvay Specialty Polymers), Aciplex (trademark Asahi Glass), or the others can be used as the fluorinated polymers having sulfonic acid groups.

The thickness of the electrolyte membrane 13 can be determined appropriately in consideration of the membrane's permeability, durability, and other characteristics. From the viewpoint of strength, dissolution resistance, and MEA output characteristics, it is preferable that the thickness of the electrolyte membrane 13 is 20 [um] or more and 500 [µm] or less, more preferably 50 [um] or more and 300 [um] or less, and even more preferably 80 [um] or more and 200 [um] or less.

The electrolyte membrane 13 preferably includes a noble metal region on the first electrode 11 side. The noble metal region includes noble metal particles. The noble metal region is preferably located on the surface of the electrolyte membrane 13. The noble metal region preferably consists of a single region, but may also consist of multiple separated regions.

The noble metal particles are preferably particles of one or more noble metals selected from the group consisting of Pt, Re, Rh, Ir, Pd, and Ru. The noble metal particles may include particles of alloy including one or more elements selected from the group consisting of Pt, Re, Rh, Ir, Pd, and Ru. The noble metal particles are preferably particles of one noble metal selected from the group consisting of Pt, Re, Rh, Ir, Pd, and Ru. Pt particles are preferable for the noble metal particles. Re particles are preferable for the noble metal particles. Rh particles are preferable for the noble metal particles. Ir particles are preferable for noble metal particles. Pd particles are preferable for noble metal particles. Ru particles are preferable for noble metal particles.

The noble metal particles oxidize hydrogen that is generated on the cathode side and passes through the electrolyte membrane 13. The noble metal particles can reduce hydrogen leakage. Since the noble metal particles are present on the anode side, they are less likely to oxidize the hydrogen that is discharged from the cathode side. The area where noble metal particles are present may also be present in the electrolyte membrane 13 on the second electrode 12 (cathode) side.

The average circumscribed circle diameter of the noble metal particles is preferably 0.5 [nm] or more and 50 [nm] or less, more preferably 1 [nm] or more and 10 [nm] or less, and even more preferably 1 [nm] or more and 5 [nm] or less.

By virtue of using the highly durable electrode 100 as the cathode of the membrane electrode assembly 200, it is possible to operate for long periods of time with high activity.

### (THIRD EMBODIMENT)

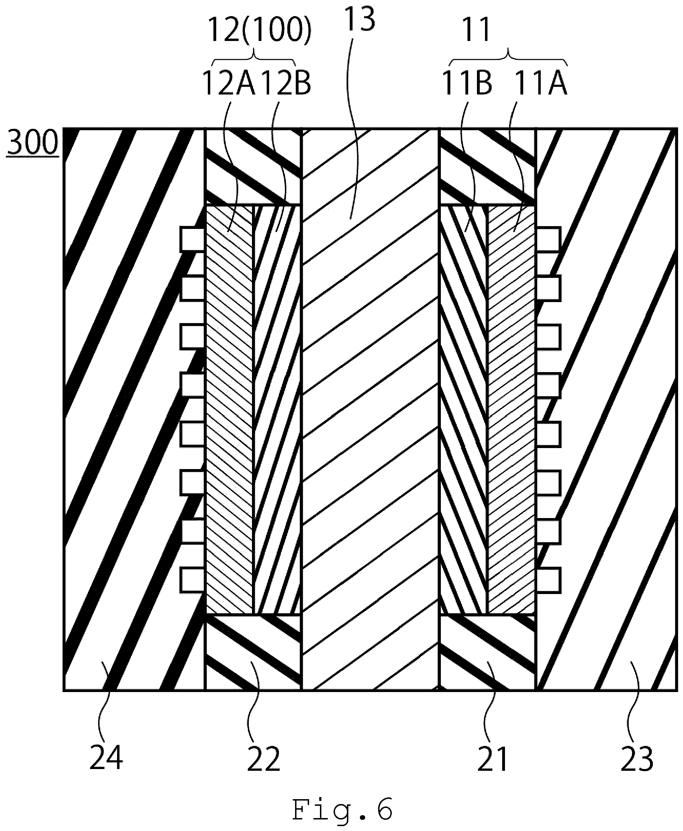

A third embodiment relates to an electrochemical cell. FIG. 6 shows a cross-sectional diagram of the electrochemical cell 300 of the second embodiment. The electrochemical cell 300 is described below using water electrolysis as an example, but hydrogen can also be generated by decomposing ammonia and other substances in other than water.

As shown in FIG. 6, the electrochemical cell 300 of the third embodiment has a first electrode (anode) 11, a second electrode (cathode) 12, an electrolyte membrane 13, a gasket 21, a gasket 22, a separator 23, and a separator 24. As the gasket 21, the sealing material of the first electrode 11 may be used. As the gasket 22, the seal material of the second electrode 12 may be used.

It is preferable that the membrane electrode assembly 200 in which the first electrode (anode) 11, the second electrode (cathode) 12, and the electrolyte membrane 13 are bonded together is used. The anode feeder may be provided separately from the separator 23. The cathode feeder may be provided separately from the separator 24.

In the electrochemical cell 300 shown in FIG. 6, a power supply, not shown, is connected to the separator 23 and the separator 24, and reactions occur at the anode 11 and the cathode 12. Water, for example, is supplied to the anode 11, and at the anode 11, the water is decomposed into protons, oxygen and electrons. The support and feeder of the electrode is a porous material, and this porous material functions as a passage plate. The produced and unreacted water is discharged, while the protons and electrons are used for cathodic reactions. In the cathode reaction, protons and electrons react to produce hydrogen. Either or both of the hydrogen and oxygen produced are used, for example, as fuel for fuel cells.

### (FOURTH EMBODIMENT)

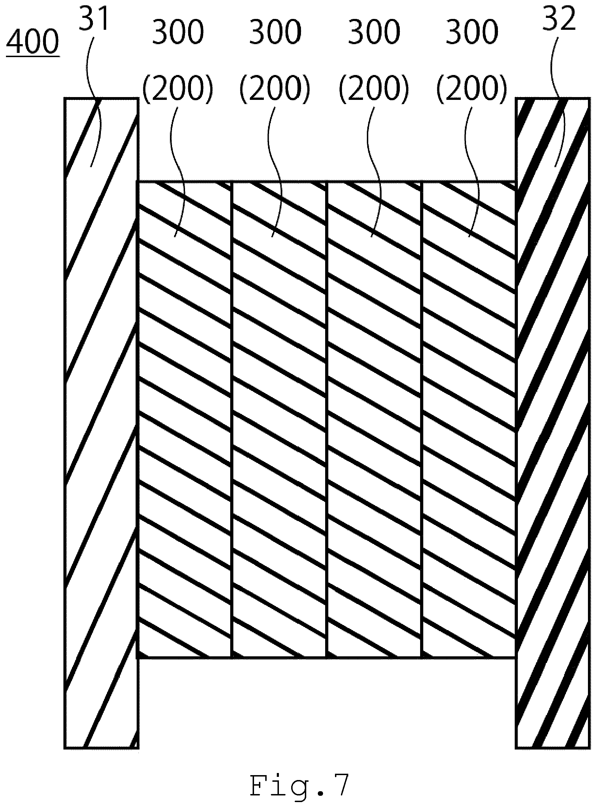

A fourth embodiment relates to a stack. FIG. 7 is a schematic cross-sectional diagram of a stack 400 of the fourth embodiment. The fourth embodiment of the stack 400 shown in FIG. 7 consists of a plurality of the MEA 200 or the electrochemical cells 300 connected in series, with tightening plates 31 and 32 attached to both ends of the MEA or the electrochemical cells.

Since the amount of hydrogen produced by an electrochemical cell 300 consisting of a single MEA 200 is small, the stack 400 consisting of multiple MEA 200 or multiple electrochemical cells 300 connected in series can produce a large amount of hydrogen.

### (FIFTH EMBODIMENT)

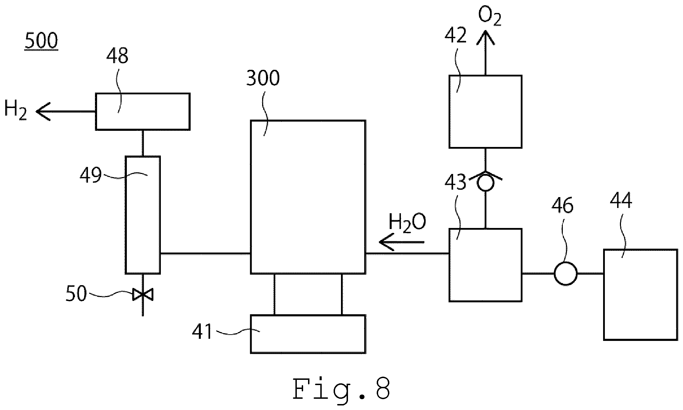

The fifth embodiment relates to an electrolyzer. FIG. 8 shows a conceptual diagram of an electrolyzer of the fifth embodiment. The electrochemical cell 300 or the stack 400 is used for the electrolyzer 500. The electrolyzer 500 of FIG. 8 is for water electrolysis. An electrolyzer for water electrolysis will be described. For example, when hydrogen is generated from ammonia, it is preferable that the electrolyzer has a different configuration of the electrode 100.

As shown in FIG. 8, single cells for water electrolysis are stacked in series to form a stack 400. A power supply 41 is attached to the stack 400, and voltage is applied between the anode and cathode. On the anode side of the stack 400, a gas-liquid separator 42 that separates the generated gas and unreacted water, and a mixing tank 43 are connected. The water is circulated to the anodes. The oxygen generated at the anode passes through the gas-liquid separator 42 to obtain oxygen gas. On the cathode side, a hydrogen purifier 49 is connected to the gas-liquid separator 48 to obtain high-purity hydrogen. Impurities are discharged through a path with a valve 50 connected to the hydrogen purifier 49. The stack and mixing tank can be heated to control stable operating temperatures, and the current density during pyrolysis can be controlled.

Hereinafter, examples of the embodiments will be described.

### (Example A)

### Preparation of anode (first electrode 11)

A Ti nonwoven fabric support with a size of 2 [cm] × 2 [cm] and a thickness of 200 [µm] is used as the base material. Cobalt and iridium are sputtered onto the titanium support to form the sheet layer precursor. Then, only nickel is sputtered to form the gap layer precursor. This process of forming the sheet layer and gap layer is repeated 40 times alternately to obtain a stacked structure with Ir per area of 0.2 [mg/cm²] . The stacked catalyst is then washed with sulfuric acid to partially dissolve the nickel. After the acid treatment, the sheet layer precursor mostly becomes a sheet layer. After acid treatment, the gap layer precursor mostly becomes a gap layer. This electrode is used as the standard anode in the examples and comparative examples.

### Preparation of cathode (second electrode 12)

Carbon particles with an average primary particle diameter of 30-80 [nm] is mixed and stirred with binder, isopropyl alcohol, and water to obtain carbon paste for the intermediate layer. Table 1 shows the carbon particles and binder in the carbon paste. Prepare carbon paper Toray 060 (Toray Industries, Inc.) of size 25 [cm] × 25 [cm] and thickness 190 [um] as a support. The carbon paste is applied to this base material by spraying to obtain a substrate with an intermediate layer. The thickness and porosity of the intermediate layer are shown in Table 2. A porous catalyst layer including catalyst units with a stacked structure including a void layer is formed by sputtering method to obtain a loading density of 0.1 [mg/cm²] of Pt catalyst, and an electrode with a porous catalyst layer. One sheet layer precursor is obtained by sputtering Pt at 100W and Ni, Co, and Mn at 50W for 50 seconds. The average thickness of the sheet layer is 5 nm. The overall thickness of the catalyst layer is adjusted by changing the thickness of the gap layer precursor. Table 3 shows the sputtering conditions of the gap layer precursor to form the catalyst layer. The sputtering of the sheet layer precursor and gap layer precursor are alternately repeated 21 and 20 times, respectively. Table 4 shows the average size of the catalyst units and the average height of the catalyst layers.

**[Table 1]**

| | Intermediate Layer | | |
|---|---|---|---|
| | Carbon Particles | Average Primary Particle Size of Carbon Particles [nm] | Binder |
| Example A-1 | Ketjen EC600JD | 34 | PTFE |
| Example A-2 | Vulacn XC72R | 50 | PTFE |
| Example A-3 | # 5 (Mitsubishi Chem.) | 76 | PTFE |
| Example A-4 | Ketjen EC600JD | 34 | Nafion Ionomer |
| Example A-5 | Vulacn XC72R | 50 | Nafion Ionomer |
| Example A-6 | #5 (Mitsubishi Chem.) | 76 | Nafion Ionomer |
| Example A-7 | Ketjen EC600JD | 34 | PTFE |
| Example A-8 | Ketjen EC600JD | 34 | PTFE |
| Example A-9 | Ketjen EC600JD | 34 | PTFE |
| Example A-10 | Ketjen EC600JD | 34 | PTFE |
| Comparative Example A-1 | Ketjen EC600JD | 34 | PTFE |
| Comparative Example A-2 | Ketjen EC600JD | 34 | PTFE |
| Comparative Example A-3 | Ketjen EC600JD | 34 | PTFE |
| Comparative Example A-4 | Ketjen EC600JD | 34 | PTFE |
| Comparative Example A-5 | Ketjen EC600JD | 34 | Nafion Ionomer |
| Comparative Example A-6 | Ketjen EC600JD | 34 | PTFE |
| Comparative Example A-7 | Ketjen EC600JD | 34 | PTFE |
| Comparative Example A-8 | Ketjen EC600JD | 34 | PTFE |
| Comparative Example A-9 | #5 (Mitsubishi Chem.) | 76 | PTFE |

**[Table 2]**

| | Intermediate Layer | |
|---|---|---|
| | Thickness [µm] | Porosity [%] |
| Example A- 1 | 70 | 40 |
| Example A-2 | 120 | 40 |
| Example A-3 | 150 | 40 |
| Example A-4 | 70 | 30 |
| Example A-5 | 200 | 70 |
| Example A-6 | 70 | 50 |
| Example A-7 | 100 | 60 |
| Example A-8 | 120 | 40 |
| Example A-9 | 150 | 40 |
| Example A-10 | 200 | 40 |
| Comparative Example A-1 | 30 | 40 |
| Comparative Example A-2 | 50 | 40 |
| Comparative Example A-3 | 300 | 40 |
| Comparative Example A-4 | 500 | 40 |
| Comparative Example A-5 | 50 | 90 |
| Comparative Example A-6 | 70 | 40 |
| Comparative Example A-7 | 70 | 40 |
| Comparative Example A-8 | 70 | 40 |
| Comparative Example A-9 | 200 | 40 |

**[Table 3]**

| | Gap Layer Precursor | | | | | | | | |
|---|---|---|---|---|---|---|---|---|---|
| | Thick ness [nm] | Pt | | I Co | | Ni | | I Mn | |
| | | DC Output power [W] | Time [sec] | DC Output power [W] | Time [sec] | RF Output power [W] | Time [sec] | RF Output power [W] | Time [sec] |
| Example A-1 | 10 | 0 | 0 | 100 | 50 | 100 | 50 | 100 | 50 |
| Example A-2 | 20 | 0 | 0 | 100 | 100 | 100 | 100 | 100 | 100 |
| Example A-3 | 2 | 0 | 0 | 100 | 5 | 100 | 5 | 100 | 5 |
| Example A-4 | 40 | 0 | 0 | 100 | 200 | 100 | 200 | 100 | 200 |
| Example A-5 | 25 | 0 | 0 | 100 | 125 | 100 | 125 | 100 | 125 |
| Example A-6 | 10 | 0 | 0 | 100 | 50 | 100 | 50 | 100 | 50 |
| Example A-7 | 10 | 0 | 0 | 100 | 50 | 100 | 50 | 100 | 50 |
| Example A-8 | 10 | 0 | 0 | 100 | 50 | 100 | 50 | 100 | 50 |
| Example A-9 | 10 | 0 | 0 | 100 | 50 | 100 | 50 | 100 | 50 |
| Example A-10 | 10 | 0 | 0 | 100 | 50 | 100 | 50 | 100 | 50 |
| Comparative Example A-1 | 10 | 0 | 0 | 100 | 50 | 100 | 50 | 100 | 50 |
| Comparative Example A-2 | 10 | 0 | 0 | 100 | 50 | 100 | 50 | 100 | 50 |
| Comparative Example A-3 | 10 | 0 | 0 | 100 | 50 | 100 | 50 | 100 | 50 |
| Comparative Example A-4 | 10 | 0 | 0 | 100 | 50 | 100 | 50 | 100 | 50 |
| Comparative Example A-5 | 10 | 0 | 0 | 100 | 50 | 100 | 50 | 100 | 50 |
| Comparative Example A-6 | 100 | 0 | 0 | 100 | 500 | 100 | 500 | 100 | 500 |
| Comparative Example A-7 | 200 | 0 | 0 | 100 | 1000 | 100 | 1000 | 100 | 1000 |
| Comparative Example A-8 | 300 | 0 | 0 | 100 | 1500 | 100 | 1500 | 100 | 1500 |
| Comparative Example A-9 | 10 | 0 | 0 | 100 | 50 | 100 | 50 | 100 | 50 |

**[Table 4]**

| | Average Size of Catalyst Units [µm] | Average Height of Catalyst Layers [µm] |
|---|---|---|
| Example A-1 | 0.1 | 0.305 |
| Example A-2 | 0.25 | 0.505 |
| Example A-3 | 1 | 0.145 |
| Example A-4 | 0.2 | 0.905 |
| Example A-5 | 0.5 | 0.605 |
| Example A-6 | 0.8 | 0.305 |
| Example A-7 | 0.1 | 0.305 |
| Example A-8 | 0.12 | 0.305 |
| Example A-9 | 0.2 | 0.305 |
| Example A-10 | 0.3 | 0.305 |
| Comparative Example A-1 | 0.05 | 0.305 |
| Comparative Example A-2 | 0.1 | 0.305 |
| Comparative Example A-3 | 0.9 | 0.305 |
| Comparative Example A-4 | 1 | 0.305 |
| Comparative Example A-5 | 0.1 | 0.305 |
| Comparative Example A-6 | 0.2 | 2.105 |
| Comparative Example A-7 | 0.2 | 4.105 |
| Comparative Example A-8 | 0.3 | 6.105 |
| Comparative Example A-9 | 1.5 | 0.305 |

The electrolyte membrane is 7 [cm] × 7 [cm] in size, Nafion115 manufactured by Chemours, and the electrolyte membrane is sandwiched between anode and cathode for hot pressing. The MEA is placed in a hot press apparatus and pressed at 160 [°C] and 20 [kg/cm²] for 3 minutes, followed by press cooling at 25[°C] and 20 [kg/cm²] for 3 minutes.

### <Preparation of Single cell>

The resulting MEA and gasket are set between two separators with a passage plate to create a PEEC single cell (electrochemical cell). A back pressure valve is attached to the outlet of the hydrogen side of the separator with flow paths to increase the internal pressure of hydrogen.

Next, the anodes of Example A and Comparative Example A are evaluated. Conditioning is performed on the single cell obtained for one day. The temperature is then maintained at 80 [°C] and ultrapure water is supplied to the anode at 0.01 [L/min]. A current is applied between the anode and cathode at a current density of 2 [A/cm²] using a power supply, and the cell voltage (VC) is measured after 48 hours of operation. The cell voltages (VC) are shown in Table 6.

Initial voltage is evaluated as follows according to cell voltage (VC).
Cell voltage (VC) 1.7 [V] or more and less than 1.85 [V] Rating: A
Cell voltage (VC) 1.85 [V] or more and less than 1.9 [V] Rating: B
Cell voltage (VC) 1.9 [V] or more and 2.4 [V] or less Rating: C

Durability is evaluated according to the following durability protocol. A single cell is maintained at 80 [°C] while ultrapure water is supplied to the anode at a flow rate of 0.05 [L/min]. Under these conditions, the cell voltage is held at 1.2 [V] for 3 seconds, and then held at 2.0 [V] for 3 seconds, for one cycle. This cycle is repeated for a total of 3,000 cycles. The temperature is then maintained at 80 [°C] and ultrapure water is supplied to the anodes at 0.01 [L/min]. The cell voltage (V1) is measured after 24 hours of operation with a current applied at a current density of 2 [A/cm²] between the anode and cathode using a power supply. The voltage increasing rate (100 × (V1)/VC-100) is calculated by comparing the cell voltage (V1) with the cell voltage (VC) before the durability evaluation. The increasing rate and cell voltage (V1) are shown in Table 5.

The durability is evaluated according to the increasing rate as follows.
Increasing Rate 0 [%] or more and 1.5 [%] or less: A
Increasing Rate more than 1.5[%] and 3[%] or less: B
Increasing Rate more than 3 [%] and less than 5 [%]: C
Increasing Rate more than 5 [%] and 50 [%] or less: D

Initial voltage is evaluated as follows according to cell voltage (V1).
Cell voltage (V1) 1.7 [V] or more and less than 1.85 [V] Rating: A
Cell voltage (V1) 1.85 [V] or more and less than 1.9 [V] Rating: B
Cell voltage (V1) 1.9 [V] or more and 2.4 [V] or less Rating: C

**[Table 5]**

| | VC [V] | V1 [V] | Increasing Rate [%] |
|---|---|---|---|
| Example A-1 | 1.79 | 1.8 | 0.56 |
| Example A-2 | 1.8 | 1.81 | 0.56 |
| Example A-3 | 1.82 | 1.825 | 0.27 |
| Example A-4 | 1.81 | 1.82 | 0.55 |
| Example A-5 | 1.8 | 1.81 | 0.56 |
| Example A-6 | 1.83 | 1.835 | 0.2 7 |
| Example A-7 | 1.78 | 1.8 | 1.12 |
| Example A-8 | 1.8 | 1.82 | 1.11 |
| Example A-9 | 1.81 | 1.82 | 0.55 |
| Example A-10 | 1.83 | 1.835 | 0.27 |
| Comparative Example A-1 | 1.8 | 1.95 | 8.33 |
| Comparative Example A-2 | 1.81 | 1.94 | 7.18 |
| Comparative Example A-3 | 1.88 | 1.89 | 0.53 |
| Comparative Example A-4 | 1.92 | 1.925 | 0.26 |
| Comparative Example A-5 | 1.81 | 1.94 | 7.18 |
| Comparative Example A-6 | 1.81 | 1.89 | 4.42 |
| Comparative Example A-7 | 1.82 | 1.95 | 7.14 |
| Comparative Example A-8 | 1.84 | 1.95 | 5.98 |
| Comparative Example A-9 | 1.86 | 1.865 | 0.27 |

As shown in the Examples and Comparative Examples in Tables 1-5, the initial characteristics vary depending on the thickness of the intermediate layer 2. An appropriate thickness of the intermediate layer is considered to exist because if the thickness of the intermediate layer 2 is too thin, the catalyst layer 3 will peel off from the electrolyte membrane 13 due to the gas generated, resulting in poor durability, and if the intermediate layer 2 is too thick, peeling is reduced, but the initial cell voltage VC will deteriorate because the electronic resistance of the intermediate layer 2 will be higher.

Also, when the initial cathode catalyst layer is thick, the appropriate thickness of the cathode catalyst layer exists since the catalyst structure tends to collapse and the electronic resistance deteriorates. Similarly, an appropriate catalyst unit size is desired since a large average size of units leads to poor gas diffusion and poor initial performance.

Some elements are expressed only by element symbols thereof.

Hereinafter, clauses of embodiments are additionally noted.
Clause 1 An electrode comprising:
   a substrate;
   an intermediate layer including carbon particles and resin on the support; and
   a catalyst layer on the intermediate layer, wherein
   a thickness of the intermediate layer is 70 [um] or more and 300 [um] or less.
Clause 2 The electrode according to claim 1, wherein
   an average thickness of the intermediate layer relative to an average thickness of the catalyst layer is 50 or more and 250 or less .
Clause 3 The electrode according to clause 1 or 2, wherein
   a product of an average thickness of the intermediate layer and a porosity of the intermediate layer to an average thickness of the catalyst layer is 20 or more and 200 or less.
Clause 4 The electrode according to any one of clauses 1 to 3, wherein
   the catalyst layer is carrier-less and has porous catalyst units.
Clause 5 The electrode according to any one of clauses 1 to 3, wherein
   a thickness of the catalyst layer is 0.5 [um] or more and 5 [um] or less.
Clause 6 The electrode according to claim 4, wherein
   an average circumscribed circle diameter of the catalyst units is 50 [nm] or more and 100 [um] or less.
Clause 7 The electrode according to any one of clauses 1 to 6, wherein
   the electrode generates hydrogen.
Clause 8 A membrane electrolyte assembly comprising:
   the electrode according to any one of clauses 1 to 7.
Clause 9 An electrochemical cell comprising:
   the membrane electrolyte assembly according to clause 8.
Clause 10 A stack comprising:
   the membrane electrolyte assembly according to clause 8.
Clause 11 A stack comprising:
   the electrochemical cell according to clause 9.
Clause 12 An electrolyzer comprising:
   the stack according to clause 10.
Clause 13 An electrolyzer comprising:
   the stack according to clause 11.

While certain embodiments have been described, these embodiments have been presented by way of example only, and are not intended to limit the scope of the inventions. Indeed, the novel embodiments described herein, for example, PEMEC as a water electrolysis cell may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An electrode comprising:
a substrate;
an intermediate layer including carbon particles and resin on the support; and
a catalyst layer on the intermediate layer, wherein
a thickness of the intermediate layer is 70 [um] or more and 300 [um] or less.

2. The electrode according to claim 1, wherein
an average thickness of the intermediate layer relative to an average thickness of the catalyst layer is 50 or more and 250 or less .

3. The electrode according to claim 1 or 2, wherein
a product of an average thickness of the intermediate layer and a porosity of the intermediate layer to an average thickness of the catalyst layer is 20 or more and 200 or less.

4. The electrode according to any one of claims 1 to 3, wherein
the catalyst layer is carrier-less and has porous catalyst units.

5. The electrode according to any one of claims 1 to 4, wherein
a thickness of the catalyst layer is 0.5 [um] or more and 5 [um] or less.

6. The electrode according to claim 4, wherein
an average circumscribed circle diameter of the catalyst units is 50 [nm] or more and 100 [um] or less.

7. The electrode according to any one of claims 1 to 6, wherein the electrode generates hydrogen.

8. A membrane electrolyte assembly comprising:
the electrode according to any one of claims 1 to 7.

9. An electrochemical cell comprising:
the membrane electrolyte assembly according to claim 8.

10. A stack comprising:
the membrane electrolyte assembly according to claim 8.

11. A stack comprising:
the electrochemical cell according to claim 9.

12. An electrolyzer comprising:
the stack according to claim 10.

13. An electrolyzer comprising:
the stack according to claim 11.
